# EUROPÄISCHE PATENTSCHRIFT

(11) **EP 2 699 781 B1**
(45) Veröffentlichungstag und Bekanntmachung des Hinweises auf die Patenterteilung: **21.06.2017**
(21) Anmeldenummer: 12727249.0
(22) Anmeldetag: 03.04.2012
(51) Int. Cl.: F02D 25/04, F16D 23/04

(54) **VERFAHREN ZUM BETRIEB EINER BRENNKRAFTMASCHINE MIT GETEILTER KURBELWELLE UND SYNCHRONKUPPLUNG ZUR KOPPLUNG ZWEIER KURBELWELLENTEILE EINER BRENNKRAFTMASCHINE**
METHOD FOR OPERATING AN INTERNAL COMBUSTION ENGINE HAVING A SPLIT CRANKSHAFT AND SYNCHRONOUS CLUTCH FOR COUPLING TWO CRANKSHAFT PARTS OF AN INTERNAL COMBUSTION ENGINE
PROCÉDÉ POUR FAIRE FONCTIONNER UN MOTEUR À COMBUSTION INTERNE À VILEBREQUIN EN DEUX PIÈCES ET ACCOUPLEMENT SYNCHRONE POUR ACCOUPLER DEUX PIÈCES DE VILEBREQUIN D'UN MOTEUR À COMBUSTION INTERNE

(30) Priorität: 20.04.2011 DE 102011018322
(43) Veröffentlichungstag der Anmeldung: 26.02.2014
(73) Patentinhaber: Schaeffler Technologies AG & Co. KG, 91074 Herzogenaurach (DE)
(72) Erfinder: MEINHARD, Rolf, 77815 Bühl (DE); FRIEDMANN, Oswald, 77839 Lichtenau (DE)
(86) Internationale Anmeldenummer: PCT/DE2012/000352
(87) Internationale Veröffentlichungsnummer: WO 2012/142993

(56) Entgegenhaltungen:
- DE-A1- 4 036 492
- US-A- 4 523 558
- US-A1- 2004 138 026

## Beschreibung

Erfindung betrifft ein Verfahren zum Betrieb einer Brennkraftmaschine mit einem ersten, auch ausschließlich betriebenen Hauptmotor mit einem ersten Kurbelwellenteil und einem zweiten, mittels einer Synchronkupplung mit diesem koppelbaren Ergänzungsmotor mit einem zweiten Kurbelwellenteil, wobei die Synchronkupplung aus einer eine vorgegebene Schlupfdrehzahl zwischen den Kurbelwellenteilen einstellenden Reibungskupplung und einer bei Einstellung der Schlupfdrehzahl an einer Synchronposition mit exakter Drehwinkelposition einer vorgegebenen Zündfolge der Brennkraftmaschine mit gekoppelten Kurbelwellenteilen einen Formschluss dieser einstellenden beziehungsweise lösenden Formschlusskupplung gebildet ist.

Aus der DE 31 45 381 A1 ist eine Brennkraftmaschine mit zwei Teilmotoren bekannt. Insbesondere bei Fahrten im Teillastbereich kann zur Reduzierung von Treibstoff ein Ergänzungsmotor mittels einer Synchronkupplung abgekoppelt und anschließend bei erwünschter Volllast wieder angekoppelt werden. Hierbei wird die Synchronkupplung betätigt, indem ein axial verlagerbarer Kurbelwellenteil eines Ergänzungsmotors vorgesehen wird, der gegenüber einem axial fest gelagerten Kurbelwellenteil des anderen Ergänzungsmotors verlagert wird, wobei an der Synchronkupplung ein Reibschluss oder Formschluss eingestellt wird. Die Verlagerung des axial verlagerbaren Kurbelwellenteils erfolgt mittels einer an der der Synchronkupplung entgegen gesetzten Stirnseite des Kurbelwellenteils angeordneten Betätigungseinrichtung.

Weiterhin sind Synchronkupplungen und Verfahren zu deren Steuerung beispielsweise aus der DE 30 05 344 A1 bekannt, bei denen eine kombinierte Reibungskupplung und Formschlusskupplung einen Formschluss bei Drehzahlgleichheit zwischen zwei Kurbelwellenteilen einer Brennkraftmaschine mit zwei Teilmotoren eingestellt wird. Während der Drehzahl-Angleichung der Kurbelwellenteile während einer Synchronphase ausgehend von den voneinander getrennten Kurbelwellenteilen wird eine Drehzahldifferenz zwischen den beiden Kurbelwellen eingestellt, um einen Winkelversatz dieser bis zur Synchronposition, bei der der Formschluss der Formschlusskupplung stattfindet, eingestellt. Ist die Synchronposition erreicht, tritt durch den Formschluss ein Stoßmoment auf, das zu Geräuschen, einer Überbelastung der beteiligten Bauteile, Beschädigungen der den Formschluss bildenden Formschlussteile und dergleichen führen kann.

Auch aus der US 4,523,558 ist ein Verfahren zum Betrieb einer Brennkraftmaschine mit geteilter Brennkraftmaschine und einer Synchronkupplung bekannt. Der Hilfsmotor wird hier über eine schlupfende Synchronkupplung zugeschaltet. Wenn eine ausgehende Kurbelwelle schneller rotiert als die Kurbelwelle des Hauptmotors wird hier eine formschlüssige Verbindung der beiden Teilmotoren über eine entsprechende Klauenkupplung vorgenommen.

Ähnlich funktionierende Brennkraftmaschinen mit geteilter Brennkraftmaschine sind auch aus der DE 40 36 492 A1 und der US 2004/0138026 A1 bekannt.

Während des Startvorgangs des Hilfsmotors kommt es zu Momentenspitzen des Hilfsmotors, wodurch dessen Drehzahl die Drehzahl des Hauptmotors überholt. Hierdurch können Geräusche und erhöhte Stoßmomente auftreten.

Aufgabe der Erfindung ist daher ein Verfahren zum Betrieb einer Brennkraftmaschine mit geteilter Brennkraftmaschine und/oder eine Synchronkupplung vorzuschlagen, die ein verringertes Stoßmoment während der Synchronphase erzeugen.

Bezogen auf eine Steuerung wird die Aufgabe durch ein Verfahren zum Betrieb einer Brennkraftmaschine mit einem ersten, auch ausschließlich betriebenen Hauptmotor mit einem ersten Kurbelwellenteil und einem zweiten, mittels einer Synchronkupplung mit diesem koppelbaren Ergänzungsmotor mit einem zweiten Kurbelwellenteil gelöst, wobei die Synchronkupplung aus einer eine vorgegebene Schlupfdrehzahl zwischen den Kurbelwellenteilen einstellenden Reibungskupplung und einer bei Einstellung der Schlupfdrehzahl an einer Synchronposition mit exakter Drehwinkelposition einer vorgegebenen Zündfolge der Brennkraftmaschine mit gekoppelten Kurbelwellenteilen einen Formschluss dieser einstellenden beziehungsweise lösenden Formschlusskupplung gebildet ist, während eines Synchronvorgangs der beiden Kurbelwellenteile bei stillgelegtem Ergänzungsmotor und anfangs geöffneter Synchronkupplung ein über die Reibungskupplung übertragenes Kupplungsmoment auf die vorgegebene Schlupfdrehzahl zwischen den Kurbelwellenteilen geregelt, der Ergänzungsmotor gestartet und die Synchronposition durch Beschleunigung des Kurbelwellenteils des Ergänzungsmotors angefahren und die Formschlusskupplung geschlossen wird.

Mittels des vorgeschlagenen Verfahrens kann die Differenzdrehzahl zwischen den Kurbelwellenteilen zum Zeitpunkt der Arretierung der Formschlusskupplung durch das Überrollen des startenden wie zündenden Ergänzungsmotors wesentlich verringert und beispielsweise auf Differenzdrehzahlen kleiner 100 1/min ausgelegt werden. Hierdurch wird das Stoßmoment entscheidend verbessert, da bei geringeren Differenzdrehzahlen die sich unterscheidenden Momentenanteile der beiden Kurbelwellenteile geringer ausfallen. Dabei geht eine Verringerung der Differenzdrehzahl nicht zulasten der Synchronzeiten, da der Ergänzungsmotor durch seinen infolge der Zündvorgänge beschleunigten Kurbelwellenteil die Differenzdrehzahlen der beiden Kurbelwellenteile schnell verringert, wodurch Synchronzeiten kleiner 0,2 sec erzielt werden können.

Unter Brennkraftmaschine kann beispielsweise eine Hubkolbenverbrennungsmaschine verstanden werden, die über eine vorgegebene Anzahl von Zylindern und entsprechende darin verlagerter Kolben aufweist, die die Kurbelwellenteile antreiben. Die Anordnung der Zylinder kann V-förmig, eine Reihenanordnung und dergleichen sein. Die Kurbelwellenteile können in Reihe oder parallel zueinander angeordnet sein, wobei in diesem Fall eine Kraftübertragung wie Zahnradpaarung, Kettenverbindung oder dergleichen zwischen den Kurbelwellenteilen eine koaxiale Versorgung der Synchronkupplung bereitstellt. Die Aufteilung der Zylinder auf die beiden Kurbelwellenteile kann symmetrisch sein, so dass eine Zündfolge der Zylinder eine Wiederholung alle 360° ermöglicht. Als besonders vorteilhaft hat sich eine asymmetrische Aufteilung der Teilmotoren in einen Hauptmotor mit einer ersten Anzahl Zylindern auf einem Hubzapfen und einem Ergänzungsmotor mit einer zweiten (gegenüber der ersten Anzahl geringeren) Anzahl Zylindern auf einem weiteren Hubzapfen erwiesen, so dass die Brennkraftmaschine im Teillastbereich mit dem Hauptmotor und im Volllastbereich mit Haupt -und Ergänzungsmotor betrieben werden kann. Die Synchronkupplung ist dabei zwischen zwei Hubzapfen und damit zwischen zwei Kurbelwellenlagern angeordnet.

Hierbei wird die Drehzahl des startenden Ergänzungsmotors begrenzt werden, um eine beispielsweise mit Geräuschen und erhöhten Stoßmomenten verbundene Erhöhung der maximalen Differenzdrehzahl von beispielsweise 100 1/min zu vermeiden. Hierzu kann ein Motormoment nach dem Start des Ergänzungsmotors auf einen von einer Winkelabweichung der Kurbelwellenteile von der Synchronposition abhängigen Motormomentenwert geregelt werden. Beispielsweise kann bei Unterschreiten einer Winkelabweichung der Kurbelwellenteile unter einen vorgegebenen Wert, beispielsweise 100°, vor der Synchronposition das Motormoment des Ergänzungsmotors vom maximalen Motormoment auf einen vorgegebenen Motormomentenwert, beispielsweise 30% des maximalen Motormoments linear, stufenweise oder in anderer Weise abnehmend geregelt werden.

Gemäß einem vorteilhaften Ausführungsbeispiel des vorgeschlagenen Verfahrens wird die Reibungskupplung auf ein vorgegebenes übertragbares Kupplungsmoment, beispielsweise 200 Nm eingestellt, bei dem die Massen- und Verdichtungsmomente übertragen werden und kein Rutschen der Reibungskupplung auftritt. Während des Synchronvorgangs wie Synchronphase wird der abgekoppelte und durch Anlegen des Kupplungsmoments vom Hauptmotor geschleppte Ergänzungsmotor gezündet, wodurch dieser beispielsweise das maximale Moment aufbaut. Die Momentenspitzen während der Zündung übersteigen dabei bis zu einem Vielfachen das angelegte Kupplungsmoment, wodurch diese zu rutschen wie schlupfen beginnt, wobei der Ergänzungsmotor den Hauptmotor bezüglich der Drehzahl überholt. Durch diesen Vorgang nähern sich die Kurbelwellenteile in beschleunigter Weise jedoch mit sich abbauender Differenzdrehzahl der Synchronposition und die Formschlusselemente der Formschlusskupplung, beispielsweise in Ausnehmungen einrastende Klinken, axial ineinander greifende Verzahnungen mit bevorzugt in axiale Richtung trapezförmigen Zähnen und dergleichen, bilden den Formschluss zwischen den beiden Kurbelwellenteilen in exakter, zündwinkelgerechter Position. Beispielsweise kann bei nicht symmetrisch ausgebildetem Haupt- und Ergänzungsmotor mit einer 720°-Zündfolge bei gekoppelten Kurbelwellenteilen eine Aktivierung eines Synchronvorgangs ausschließlich bei einer Winkelpositionierung der Kurbelwellenteile unter Einhaltung der 720°-Zündfolge gestartet werden, indem eine Synchronisierung nur dann eingeleitet wird, wenn nach Abschluss der Synchronisation die Zündfolge richtig eingestellt ist. Hierbei können Informationen der Lage der Winkellage zueinander mittels entsprechender Sensoren, beispielsweise aus Informationen der Winkelstellung der ebenfalls geteilten Nockenwellen von Haupt- und Ergänzungsmotor zueinander ausgewertet werden.

Alternativ oder zusätzlich kann zur Vermeidung einer Drehzahlüberhöhung des Ergänzungsmotors Kupplungsmoment nach dem Start des Ergänzungsmotors auf einen von einer Winkelabweichung der Kurbelwellenteile von der Synchronposition abhängigen Kupplungsmomentenwert geregelt werden. Entsprechend kann eine derartige Momentenregelung linear in Abhängigkeit der Winkelabweichung zur Synchronposition linear, stufenweise oder in ähnlicher Weise zunehmend geregelt werden.

Eine nicht erfindungsgemäße Vorrichtung zeigt eine Synchronkupplung zur Kopplung von Kurbelwellenteilen eines Hauptmotors und eines Ergänzungsmotors einer Brennkraftmaschine enthaltend eine, eine vorgegebene Schlupfdrehzahl zwischen den Kurbelwellenteilen einstellende, hydraulisch betätigte Reibungskupplung und eine bei Einstellung der Schlupfdrehzahl an einer Synchronposition mit exakter Drehwinkelposition einer vorgegebenen Zündfolge der Brennkraftmaschine mit gekoppelten Kurbelwellenteilen einen Formschluss dieser einstellende beziehungsweise lösende, hydraulisch betätigte Formschlusskupplung, wobei Formschlusselemente zur Bildung des Formschlusses entgegen der Wirkung der hydraulischen Betätigungseinrichtung unter Druck federbeaufschlagt sind.

Je nach erwünschter Ausführung einer im getrennten oder verbundenen Zustand der Kurbelwellenteile kraftfreien Betätigungseinrichtung kann die Synchronkupplung als zwangsweise geschlossene (normally open) oder zwangsweise geöffnete (normally closed) Synchronkupplung ausgebildet sein. Beispielsweise kann bei bevorzugtem Betrieb der Brennkraftmaschine im Teillastbetrieb vorgesehen sein, die Betätigungseinrichtung in diesem Zustand kraftfrei zu betreiben, indem die Synchronkupplung zwangsweise geschlossen wird, wobei ein an der Betätigungseinrichtung bereitzustellender Druck im Volllastbetrieb anliegen muss. Alternativ kann bei einer zwangsweise geöffneten Synchronkupplung der Volllastbetrieb drucklos erfolgen und die Synchronkupplung zum Öffnen wie trennen der Kurbelwellenteile mit Druck beaufschlagt werden.

Die Betätigungseinrichtung ist beispielsweise als in einem entsprechenden Bauteil einer der Kurbelwellenteile, bevorzugt im Kurbelwellenteil des Ergänzungsmotors aufgenommene Kolbenzylindereinrichtung vorgesehen, die von einem einzigen Ölkanal oder für die Reibungskupplung und die Formschlusskupplung getrennt ausgebildeten und entsprechend mit Druck beaufschlagten Öldruckkanälen beaufschlagt wird. Hierbei können die Reibungskupplung und/oder bevorzugt die Formschlusskupplung mittels mehreren mit einem Druckölkanal verbundenen und vom anliegenden Druck axial verlagerten Kolben beaufschlagt werden. Die Reibungskupplung beispielsweise als Lamellenkupplung kann von einem einzigen Ringkolben oder mehreren über den Umfang verteilten Einzelkolben beaufschlagt werden, die Formschlusselemente der Formschlusskupplung können beispielsweise als Klinkenring oder beispielsweise als Klinken in Form einzelner, über den Umfang angeordneter, beispielsweise in beide axiale Richtungen von entsprechend angeordneten druckbeaufschlagten Kolben verlagert werden. Bei Verwendung eines einzigen Druckölkanals können ein oder mehrere axial unter Druckeinfluss verlagerte Kolben die Reibungskupplung und die Formschlusskupplung nacheinander, also seriell beaufschlagen.

Durch die Ausbildung einer angefederten formschlüssigen Arretierung der Kurbelwellenteile kann das Stoßmoment verringert werden. Hierbei wird eine zwischen den beiden Formschlusselementen der Kurbelwellenteile angefederte Formschlussbildung erzielt, indem ein zusätzlich tangential wirksamer Energiespeicher, beispielsweise eine oder mehrere axial wirksame Federn wie Blattfedern, Tellerfedern oder dergleichen gegen die Richtung des sich bewegenden Formschlusselements gespannt wird. Hierbei wird eine Verlagerung der Formschlusselemente zur Bildung des Formschlusses während der Betätigung mittels der Betätigungseinrichtung, also der dieser zugrunde liegenden Druckkraft der Kolben insbesondere bei zwangsweise geschlossenen Synchronkupplungen bedämpft. Die Reduzierung des Stoßmomentes geschieht also durch tangential nicht starre (bedingt federnde) Formgebung, wie zum Beispiel einer Wellung bei Blattfedern.

Um eine winkelselektive Zuordnung der Kurbelwellenteile am Synchronpunkt zu ermöglichen, ist eine winkelselektive Orientierung der Formschlusselemente zueinander vorgesehen. Hierzu können die Formschlusselemente auf verschiedenen Teilkreisen angeordnet sein, so dass ein Formschluss erst an der Synchronposition bei winkelselektiver Übereinstimmung der Zündfolge der Zylinder der gesamten Brennkraftmaschine erzielt wird.

Weiterhin hat sich als vorteilhaft gezeigt, wenn die Betätigungseinrichtung der Synchronkupplung einen axial geschlossenen Kraftfluss bildet, um eine axiale Belastung der der Synchronkupplung benachbarten Kurbelwellenlager zu vermeiden. Hierzu stützen sich die Druckkraft der Betätigungseinrichtung zum Aufbau eines Reibmoments und zur Aufrechterhaltung des Formschlusses und das Widerlager der Druckkraft an demselben Kurbetwellenteil ab.

In einem nicht erfindungsgemäßen Ausführungsbeispiel werden Reibungskupplung und Formschlusskupplung mittels einer einzigen hydraulischen Betätigungseinrichtung betätigt. Hierzu können die Formschlusselemente mittels eines mit der Reibungskupplung axial gekoppelten Beabstandungsrings im geöffneten Zustand und in eine erste Drehrichtung mit Differenzdrehzahl drehenden Formschlusselementen voneinander getrennt sein und bei betätigter Reibungskupplung abhängig von der Drehrichtung schaltender Steuermittel bei nicht geänderter Drehrichtung axial vorgespannt werden und bei geänderter Drehrichtung unter Aufhebung der Vorspannung einen Formschluss bilden. Beispielsweise können hierbei Reibungskupplung und Formschlusskupplung hintereinander geschaltet sein, indem Formschlusselemente im geöffneten Zustand der Reibungskupplung nicht gegeneinander axial verspannt sind. Wird die Reibungskupplung betätigt, indem beispielsweise ein Lamellenträger axial verlagert wird, können die Formschlusselemente, beispielsweise ein Klinkenring, gegen die komplementären Formschlusselemente vorgespannt werden, wobei der Beabstandungsring deren axiale Freigabe sperrt. Der Beabstandungsring kann die Freigabe der vorgespannten Formschlusselemente abhängig von der Drehrichtung der Formschlusselemente gegeneinander steuern. Beispielsweise kann bei einem durch das vorgeschlagene Verfahren erfolgenden Überholen des Kurbelwellenteils des Ergänzungsmotors der Beabstandungsring teilweise verdreht werden, so dass dieser die vorgespannten Formschlusselemente freigibt und der Formschluss nur dann zustande kommt.

Der Formschluss kann durch eine axiale Betätigung in eine Richtung, durch eine axiale Betätigung in beide Richtungen, oder durch eine radiale Betätigung bewirkt werden.

Weiterhin kann eine Spielfreiheit des Formschlusses durch Verwendung von konischen Rasten erreicht werden.

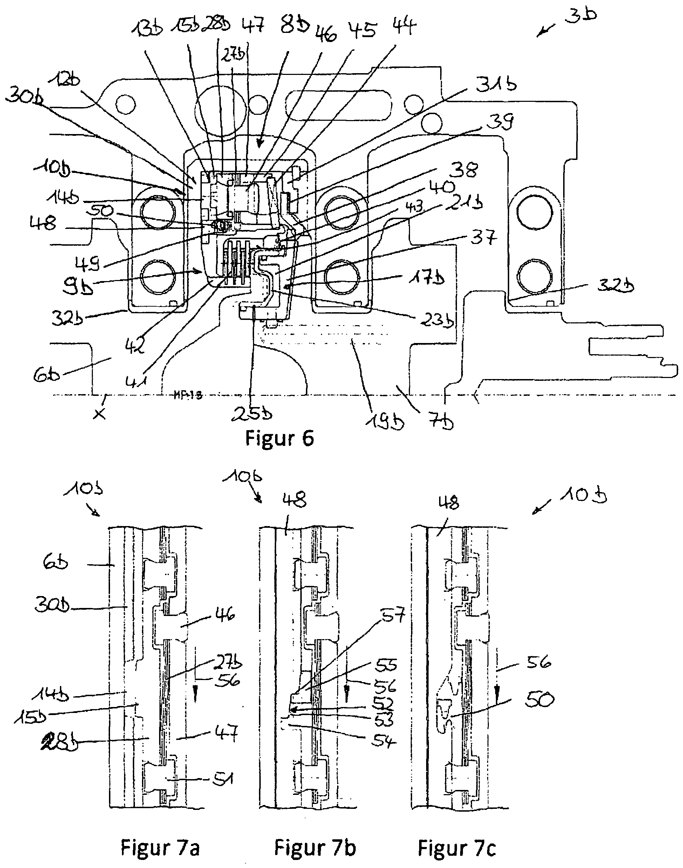

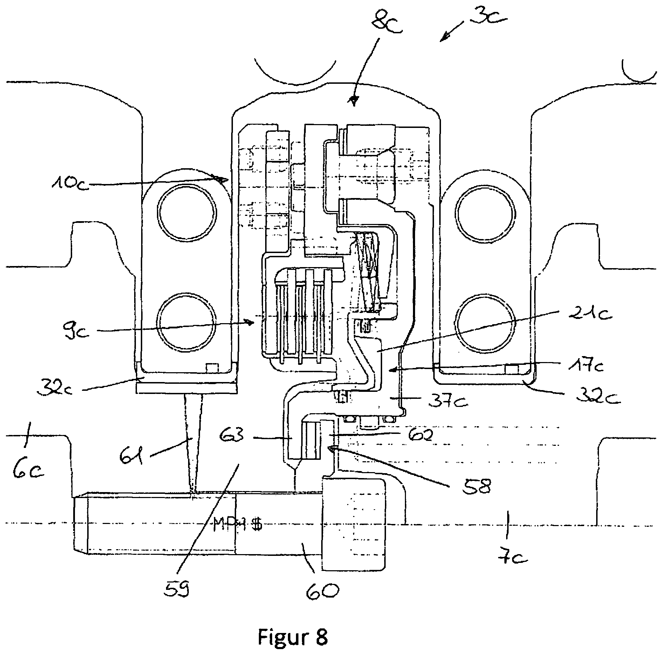

Zudem kann ein Betätigungskraftschluss innerhalb der Synchronkupplung, beispielsweise durch zusätzliche Reibelemente (Fig. 6) oder durch Axiallager (Fig. 8) erzeugt sein.

Außerdem können Formschlusselemente der Förmschlusskupplung tangential bedingt elastisch zur Reduzierung des Stossmomentes beim Einrasten angebunden sind, beispielsweise indem die Formschlusselemente axial durch Blattfedern verlagerbar sind, wobei eine Form der Blattfedern eine tangentiale Federung erlaubt. "Bedingt elastisch" meint in diesem Zusammenhang, dass eine Mindeststeifheit beibehalten wird zur Vermeidung von zusätzlichen Resonanzen. Diese Mindeststeifigkeit kann im Bereich der Kurbetwellensteifigkeit der Haupt- und/oder Ergänzungsmotoren liegen.

Die Erfindung wird anhand der in den Figuren 1 bis 9 dargestellten Ausführungsbeispiele näher erläutert. Dabei zeigen:
- Figur 1: ein Diagramm zum Ablauf einer Synchronisation zweier zuvor getrennter Kurbelwellenteile einer Brennkraftmaschine,
- Figur 2: ein weiteres, das Diagramm der Figur 1 ergänzendes Diagramm zum Ablauf der Synchronisation,
- Figur 3: eine zwischen zwei Kurbelwellenteilen einer Brennkraftmaschine wirksam angeordnete Synchronkupplung im Schnitt,
- Figur 4: eine gegenüber der Synchronkupplung der Figur 1 leicht abgeänderte Synchronkupplung im Schnitt,
- Figur 5: eine Teilabwicklung der Synchronkupplung der Figur 4,
- Figur 6: eine weitere Variante einer verglichen mit den Synchronkupplungen der Figuren 3 und 4 ähnlichen Synchronkupplung im Teilschnitt,
- Figuren 7a-c: Teilabwicklungen der Synchronkupplung der Figur 6 an verschiedenen Umfängen und
- Figur 8: eine weitere Variante einer verglichen mit den Synchronkupplungen der Figuren 3, 4 und 6 ähnlichen Synchronkupplung im Teilschnitt.

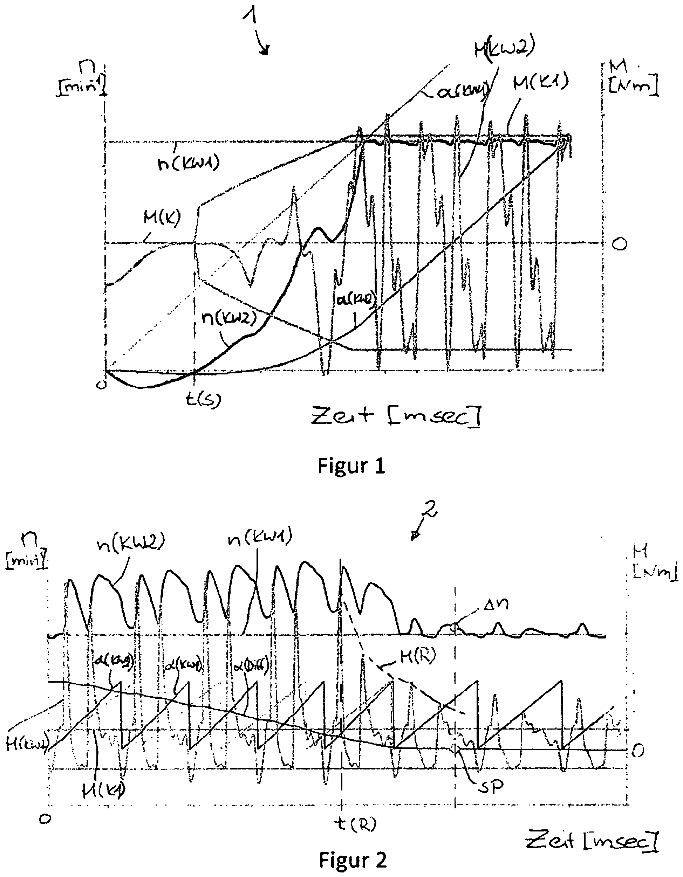

Figur 1 zeigt das Diagramm 1 verschiedener Drehzahlen n, Momente M gegen die Zeit im Bereich von Millisekunden während der Synchronisation eines Hauptmotors beispielsweise mit vier Zylindern und mit einem ersten Kurbelwellenteil und eines von diesem abgekoppelten und während der in Diagramm 1 gezeigten Synchronisation wieder angekoppelten Ergänzungsmotors beispielsweise mit zwei Zylindern und mit einem zweiten Kurbelwellenteil.

Der erste Kurbelwellenteil dreht beispielsweise im Volllastbetrieb mit der Drehzahl n(KW1), beispielsweise 2500 bis 3000 1/min. In Anbetracht der sehr gestreckten Zeitskala sind hierbei wenige Umdrehungen des ersten Kurbelwellenteils dargestellt, wie der in derselben Größenordnungsskala der Drehzahl des ersten Kurbelwellenteils dargestellte, von einem beliebigen Zeitpunkt vor Beginn der Synchronisation startende Drehwinkel α(KW1) des ersten Kurbelwellenteils andeutet.

In der Momentskala ist anfangs das über die Synchronkupplung übertragene Kupplungsmoment M(K) gleich Null, die Synchronkupplung ist geöffnet. Am Startpunkt t(S) der Synchronisation wird die Reibungskupplung der Synchronkupplung auf ein vorgegebenes Kupplungsmoment M(K1) - hier stufenweise - gesteuert, beispielsweise 200 bis 250 Nm, so dass das an dem ersten Kurbelwellenteil anliegende Moment auf den zweiten Kurbelwellenteil übertragen wird und dieser das Moment M(KW2), das sich abhängig von Gas- und Massenmomenten der Zylinder des Ergänzungsmotors einstellt, erfährt und demzufolge in Drehung mit der Drehzahl n(KW2) und dem, dem Drehwinkel α(KW1) nachlaufenden Drehwinkel α(KW2), versetzt wird.

Figur 2 zeigt das Diagramm 2 verschiedener Drehzahlen n, Momente M gegen die Zeit im Bereich von Millisekunden bei bereits geschlossener Reibungskupplung der Synchronkupplung als Fortsetzung des Diagramms 1. Hierbei wird zu Beginn der Darstellung der Ergänzungsmotor bevorzugt unter Volllast gezündet, so dass die Drehzahl n(KW2) des zweiten Kurbelwellenteils die Drehzahl n(KW1) des ersten Kurbelwellenteils überholt und das hierbei gebildete Moment M(KW2) das vorgegebene Kupplungsmoments M(K1) der Reibungskupplung übersteigt, so dass diese schlupft. Durch die Drehzahlerhöhung des zweiten Kurbelwellenteils gleichen sich die Drehwinkel α(KW1), α(KW2) zunehmend an, wie aus dem Differenzwinkel α(Diff) hervorgeht. Abhängig von der geometrischen Ausbildung der Formschlusselemente der Formschlusskupplung der Synchronkupplung findet bei einer vorgegebenen Differenzdrehzahl Δn der Drehzahlen n(KW1) und n(KW2) an der Synchronposition SP der Formschluss zwischen den beiden Kurbelwellenteilen statt.

Um das Stoßmoment bei der Bildung des Formschlusses der Formschlusskupplung zu verringern und hierdurch Geräusche und Materialbelastungen einzuschränken, wird bereits zu einem Zeitpunkt t(R) das Moment M(KW2) des Ergänzungsmotors durch Vorgabe des Grenzmoments M(R) wieder beschränkt. Der Zeitpunkt t(R) kann beispielsweise durch Vergleich des Differenzwinkels α(Diff) mit einer vorgegebenen Schwelle, der Differenzdrehzahl Δn mit einer vorgegebenen Schwelle und dergleichen erfolgen. Alternativ oder zusätzlich kann zum Zeitpunkt t(R) das vorgegebene Kupplungsmoment M(K1) in nicht dargestellter Weise erhöht werden.

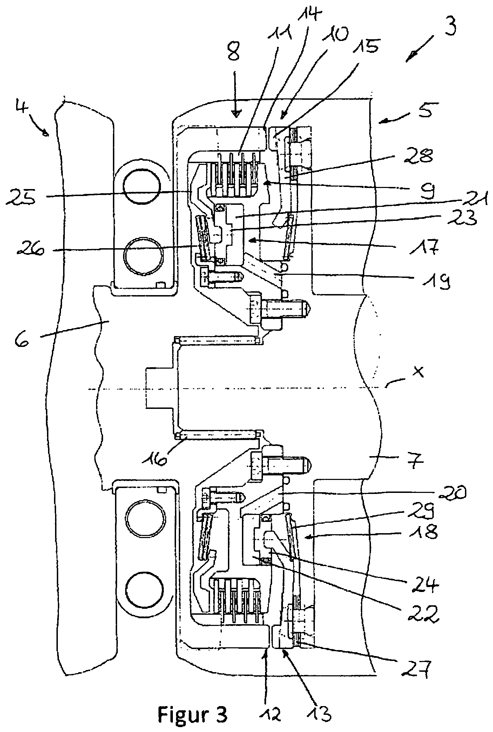

Figur 3 zeigt ausschnittsweise die Brennkraftmaschine 3 mit dem Hauptmotor 4 mit dem um die Drehachse x drehenden ersten Kurbelwellenteil 6 und dem Ergänzungsmotor 5 mit dem Kurbetwellenteil 7. Der Kurbelwellenteil 7 ist in dem gezeigten Ausführungsbeispiel mittels des Nadellagers 16 in dem Kurbelwellenteil 6 gelagert. Alternativ kann eine Gleitlagerung zwischen beiden Kurbelwellenteilen vorgesehen sein.

Zwischen den Kurbelwellenteilen 6, 7 ist die Synchronkupplung 8 angeordnet, die aus der Reibungskupplung 9 und der Formschlusskupplung 10 gebildet ist. Die Reibungskupplung 9 ist hier als Lamellenkupplung 11 ausgebildet, kann in weiteren Ausführungsbeispielen auch als Einscheibenkupplung, Konuskupplung und dergleichen ausgebildet sein. Die Reibungskupplung dient der Angleichung der Drehzahlen der beiden Kurbelwellenteile 6, 7 während deren Synchronisation. Die Formschlusskupplung 10 enthält dem ersten Kurbelwellenteil 6 zugeordnete Formschlusselemente 12 und dem zweiten Kurbelwellenteil 7 zugeordnete Formschlusselemente 13, die bei Betätigung der Formschlusskupplung 10 bei einer vorgegebenen Differenzdrehzahl von beispielsweise 80 bis 100 1/min zwischen den beiden Kurbelwellenteilen 6, 7 durch axiales Ineinandergreifen den Formschluss zwischen diesen bildet. Die Formschlusselemente 12, 13 sind in dem gezeigten Ausführungsbeispiel aus trapezförmig in axiale Richtung ausgerichtete Klauen 14, 15 gebildet, können jedoch auch aus in Ausnehmungen einrastende Klinken oder Rasten und dergleichen gebildet sein.

Die Reibungskupplung 9 und die Formschlusskupplung 10 werden von zwei unabhängig voneinander ausgebildeten hydraulischen Betätigungseinrichtungen 17, 18 betätigt. Hierbei wird durch jeweils getrennt voneinander in dem zweiten Kurbelwellenteil 7 vorgesehenen Druckkanälen 19, 20 und entsprechenden - nicht dargestellten - Druckdurchführungen Druckmedium wie Motoröl oder dergleichen herangeführt, das von einer Druckversorgungseinrichtung wie Pumpe verdichtet und mittels einer Ventileinrichtung wie Proportionalventil abhängig von den Ausgaben einer Steuerungseinrichtung, die die Synchronkupplung 8 steuert, in die Druckkammern 21, 22 geleitet wird. Die Druckkammern 21, 22 sind jeweils durch einen axial verlagerbaren Kolben 23, 24 begrenzt, der die Reibungskupplung 9, beziehungsweise die Formschlusskupplung 10 durch axial verlagerbare Bauteile betätigt. Optional kann zur Kühlung und/oder Schmierung der Lamellenkupplung 11 ein zusätzlicher Kühlölkanal vorgesehen sein.

In dem aufgeführten Ausführungsbeispiel sind die Reibungskupplung 9 und die Formschlusskupplung 10 der Synchronkupplung 8 zwangsweise geöffnet (normally closed). Hierbei ist die Reibungskupplung 9 im kraftfreien Zustand der Druckkammer 21 durch die auf den Drucktopf 25 axial wirkenden, sich an dem Kurbelwellenteil 7 abstützenden Tellerfedern 26 geschlossen, indem der Drucktopf 25 die ausgangsseitigen und eingangsseitigen Lamellen der Lamellenkupplung 11 verspannt und damit einen Reibeingriff ausbildet. Die Reibungskupplung 9 wird geöffnet, indem der Drucktopf 25 von dem unter Druck axial verlagerten Kolben 23 entgegen der Wirkung der Tellerfedern 26 axial verlagert und somit - wie dargestellt - die Lamellen der Lamellenkupplung 11 entlastet werden. Die Höhe des Drucks legt dabei das Maß des über die Reibungskupplung 9 übertragenen Kupplungsmoments fest.

Die Formschlusskupplung 10 ist in gleicher Weise zwangsweise geschlossen. Hierbei wird der mittels der Blattfedern 27 mit dem zweiten Kurbelwellenteil 7 drehfest und axial verlagerbare, die Klauen 15 enthaltende Klauenring 28 von der sich an dem zweiten Kurbelwellenteil 7 axial abstützenden Tellerfeder 29 gegen die Klauen 14 verspannt, solange die Druckkammer 22 drucklos betrieben wird. Wird die Druckkammer 22 vorgespannt, verlagert sich der Kolben 24 und spannt die Klauen 15 gegen die Klauen 14 vor, so dass bei Unterschreiten einer durch die Gestalt der Klauen 14, 15 bestimmten Differenzdrehzahl der Formschluss durch axiales Ineinandergreifen der Klauen 14, 15 ausgebildet wird. Hierbei dienen die Tellerfeder 29 und die Blattfedern 27 als elastische Elemente zur Dämpfung des Einrastens der Klauen 14, 15 und verhindern dadurch hohe Stoßmomente. Die Steifigkeit der Federelemente in Form der Tellerfedern 26 der Reibungskupplung 9 und der Tellerfeder 29 wird dabei auf einen vorgegebenen Wert begrenzt, um eine zur Abstützung der Tellerfedern 26, 29 bereitzuhaltende Gesamtsteifigkeit der Synchronkupplung zu begrenzen, so dass gegebenenfalls eingeleitete Schwingungsanregungen unterbunden beziehungsweise eingeschränkt werden können.

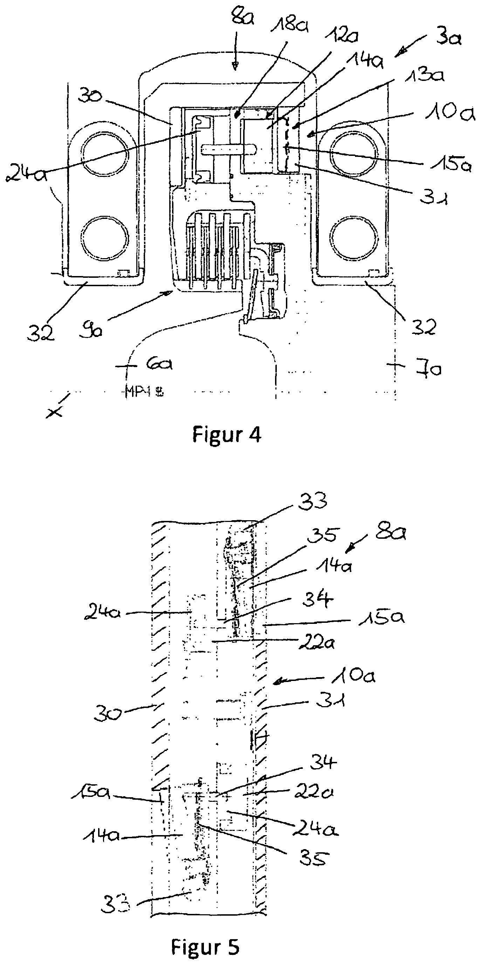

Figur 4 zeigt den oberen Teil einer um die Drehachse x angeordneten, lediglich ausschnittsweise dargestellten Brennkraftmaschine 3a mit der Synchronkupplung 8a mit zwangsweise geöffneter Reibungskupplung 9a und Formschlusskupplung 10a im Schnitt. Im Unterschied zur Formschlusskupplung 10 der Figur 3 ist die Formschlusskupplung 10a mit Formschlusselementen 12a, 13a, die aus dem zweiten Kurbelwellenteil 7a zugeordneten Klinken 14a und entsprechenden, in dem zweiten Kurbetwellenteil 6a eingebrachten Ausnehmungen 15a gebildet sind. Das Kurbetwellenteil 6a bildet dabei beidseitig die Formschlusskupplung 10a axial flankierend Ringansätze 30, 31 auf, in denen entsprechende Ausnehmungen 15a zur Aufnahme von Klinken 14a, um den Formschluss zwischen den Kurbelwellenteilen 6a, 7a zu bilden, vorgesehen sind. Hierbei wird das Kurbetwellenteil 6a bei Druckbeaufschlagung des Kolbens 24a der Betätigungseinrichtung 18a und Anlegen der Klinken 14a in beide Richtungen belastet, so dass der Kraftschluss innerhalb der Synchronkupplung 8a geschlossen wird und die Kurbelwellenlager 32 nicht durch die Betätigung der Formschlusskupplung mit Schleppmomenten belastet werden. Alternativ können zur Vermeidung einer axialen Belastung der Kurbelwellenlager radial wirksame Klinken als Formschlusselemente vorgesehen sein, die in radial außerhalb oder radial innerhalb dieser angeordnete Ausnehmungen des Kurbelwellenteils 6a einklinken, um einen Formschluss zu bilden.

Figur 5 zeigt anhand der Teilabwicklung der Synchronkupplung 8a der Figur 4 den Aufbau und die Funktion der Formschlusskupplung 10a. In dem, dem zweiten Kurbelwellenteil 7a (Figur 4) zugeordneten, hier geteilten Klinkenring 28a sind über den Umfang wechselweise verteilt Druckkammern 22a mit axial jeweils in eine gegensätzliche Verlagerungsrichtung darin verlagerbaren Kolben 24a vorgesehen, die mittels Stiften 34 an Drehlagern 33 verdrehbar angeordnete Klinken 14a beaufschlagen. Die Klinken 14a sind mittels der sich an dem Klinkenring 28a axial abstützenden Blattfedern 35 entgegen der Wirkung der Druckkolben 24a verspannt, so dass im drucklosen Zustand der Druckkammern 22a die Formschlusskupplung 10a geöffnet und zwangsweise unter Druck geschlossen wird, wobei die Klinken 14a axial in die Ausnehmungen 15a der dem Kurbelwellenteil 6a (Figur 4) zugeordneten Ringansätze 30, 31 eingreifen und den Formschluss bilden. Die Blattfedern 35 wirken bei einem Einklinken der Klinken 14a in die Ausnehmungen 15a dämpfend, so dass die Stoßmomente während der Bildung des Formschlusses verringert werden.

Figur 6 zeigt den oberen Teil der um die Drehachse x angeordneten, ausschnittsweise dargestellten Brennkraftmaschine 3b im Schnitt. Im Unterschied zu den Brennkraftmaschinen 3, 3a der Figuren 3 und 4 werden die Reibungskupplung 9b und Formschlusskupplung 10b der Synchronkupplung 8b lediglich durch einen einzige Betätigungseinrichtung 17b hintereinander betätigt. Der von dem über den Kurbelwellenteil 7b Druckmedium heranführende Druckkanal 19b versorgt die Druckkammer 21b, die in den Ringzylinder 37 eingebracht ist. Der Ringzylinder 37 stützt sich axial an dem Ringteil 38 ab, das seinerseits an dem fest mit dem Kurbelwellenteil 6b verbundenen Ringansatz 31b abgestützt ist. Zwischen Ringteil 38 und Ringansatz 31b ist die Drehentkopplung 39 vorgesehen.

Der den Kolben 23b der Betätigungseinrichtung 17b bildende, die Druckkammer 21b einseitig verschließende und axial entgegen der Tellerfeder 40 verlagerbare Drucktopf 25b verspannt das Lamellenpaket 41 und stellt bei Druckbeaufschlagung der Druckkammer 21b einen Reibschluss zwischen dem mit dem Kurbelwellenteil 6b verbundenen Lamellenträger 42 und dem mit dem Kurbelwellenteil 7b drehfest verbundenen Lamellenträger 43 her. Im drucklosen Zustand der Druckkammer 21b beabstandet die zwischen dem Lamellenträger 43 und dem Drucktopf 25b verspannte Tellerfeder 40 den Drucktopf 25b vom Lamellenpaket 41, so dass die Reibungskupplung 9b als zwangsweise zugedrückte Reibungskupplung ausgebildet ist und im nicht betätigten Zustand die beiden Kurbelwellenteile 6b, 7b nicht miteinander in reibschlüssiger Verbindung stehen.

Die Formschlusskupplung 10b ist der Reibungskupplung 9b mittels der Tellerfeder 44 nachgeschaltet. Hierzu ist diese axial zwischen dem Lamellenträger 43 und Rücksprung 45 des Klauenrings 28b, der die Formschlusselemente 13b wie Klauen 15b des Kurbelwellenteils 6b verspannt. Hierbei ist der Klauenring axial verlagerbar mittels der Blattfedern 27b und der Niete 46 mit dem radialen Ansatz 47 des Kurbelwellenteils 7b drehfest verbunden. Die axial gegenüberliegenden Formschlusselemente 12b in Form von Ausnehmungen 14b sind an dem drehfest mit dem Kurbelwellenteil 6b verbundenen Ringansatz 30b aufgenommen. Die Formschlusselemente 12b, 13b sind über den Umfang auf unterschiedlichen Teilkreisen angeordnet, um eine selektive, der Zündfolge der Zylinder der Brennkraftmaschine 3b entsprechenden Drehwinkelorientierung der Kurbelwellenteile 6b, 7b zu gewährleisten.

Wird bei Druckbeaufschlagung der Druckkammer 21b der Lamellenträger 43 axial beaufschlagt, nimmt bei Ausbildung des Reibschlusses am Lamellenpakt 41 die Tellerfeder 44 den Klauenring 28b axial mit und spannt diesen gegenüber dem Beabstandungsring 48 vor, der den Formschluss zwischen den Formschlusselementen 12b, 13b steuert. Der Beabstandungsring 48 ist mittels der Schiebeverzahnung 49 mit dem Lamellenträger 43 drehfest und axial verlagerbar verbunden und gegenüber dem Klauenring 28b entgegen der Wirkung der in Umfangsrichtung wirksamen Energiespeicher 50 wie Schraubenfedern begrenzt beispielsweise um einen Winkel von 10° verdrehbar.

Die detaillierte Erläuterung der Steuerfunktion des Beabstandungsrings 48 erfolgt anhand der Figur 6 in Verbindung mit den in den Figuren 7a bis c dargestellten Teilabwicklungen der Formschlusskupplung 10b. Figur 7a zeigt hierbei den Kurbelwellenteil 6b mit dem die Formschlusselemente 12b wie Ausnehmungen 14b enthaltenden Ringansatz 30b sowie den die Klauen 15b enthaltenden Klauenring 28b. Der Klauenring 28b ist mittels der Blattfedern 27b und den Nieten 46, 51 mit dem radialen Ansatz 47 des Kurbelwellenteils 7b drehfest und axial verlagerbar verbunden. Der Ringansatz 30b ist mit dem Kurbelwellenteil 6b fest verbunden, beispielsweise verschraubt oder vernietet.

Die Figur 7b zeigt den radial innerhalb des Klauenrings 28b angeordneten Beabstandungsring 48 mit axial eingebrachten Steueröffnungen 52 mit in Umfangsrichtung abfallenden Gleitrampen 53 und einen Formschluss bildenden Ausnehmungen 54, in die bei Verdrehung des Klauenrings 28b gegenüber dem Beabstandungsring 48 komplementär ausgebildete Nasen 55 des Klauenrings 28b einrasten.

Die Figur 7c zeigt die zwischen dem Beabstandungsring 48 und dem Klauenring 28b in Umfangsrichtung wirksamen Energiespeicher 50.

Aus der Zusammenschau der Figuren 6, 7a bis 7c ergibt sich für die Formschlusskupplung 10b folgende Funktion: wird von dem druckbeaufschlagten Drucktopf 25b der Lamellenträger 42 beaufschlagt und ein vorgegebener Kupplungsmoment über die Reibungskupplung 9b übertragen, wird zugleich mittels der Tellerfeder 44 der Klauenring 28b gegen den Beabstandungsring 48 vorgespannt und damit ein sofortiger Formschluss der Formschlusselemente 12b, 13b verhindert. Hierbei wird bei einer Verdrehung des Klauenrings 28b entgegen der Richtung des Pfeils 56, also bei gegenüber dem Kurbelwellenteil 7b schneller drehendem Kurbelwellenteil 6b der Beabstandungsring 48 durch den Anschlag 57 vom Klauenring 28b mitgenommen. Wird der Ergänzungsmotor mit dem Kurbelwellenteil 7b gezündet, überholt das Kurbelwellenteil 7b das Kurbelwellenteil 6b in Richtung des Pfeils 56. Dabei wird mit dem Kurbelwellenteil 7b das Lamellenpaket 41 und damit der Lamellenträger 43 in Richtung des Pfeils 56 beschleunigt, so dass der Beabstandungsring 48 durch die Schiebeverzahnung 49 mitgenommen und sich unter Vorspannung der Energiespeicher 50 gegenüber dem Klauenring 28b verdreht. Hierbei gleiten die Nasen 55 entlang der Gleitrampen 53 in die Ausnehmungen 54. Hierbei folgt der Klauenring 28b unter Vorspannung der Tellerfeder 44 dem axial abnehmenden Abstand der Gleitrampen 53, wobei sich die Formschlusselemente 12b, 13b annähern und bei entsprechender Winkelorientierung zueinander den Formschluss zwischen den Kurbelwellenteilen 6b, 7b bilden. Dabei wirkt die gegengerichtete Kraft der Blattfedern 27b der Tellerfeder 44 entgegen, so dass ein gedämpfter Formschluss vorgesehen werden kann.

Die gegengerichtete Kraft der Blattfedern dient nur der Öffnung des Formschlusses, wenn der Druckkolben drucklos wird und damit der Verbund [Klauenring, Tellerfeder 44, Lamellenträger, Druckkolben] wieder in die Ausgangsstellung rückt. Die Blattfedern sind aber tangential so geformt (gewellt), dass sie eine tangentiale Abfederung ermöglichen. Die Federwirkung muss aber so steif ausgeführt sein, dass sich im Fahrbetrieb der Kurbelwellen keine störenden zusätzlichen Schwingungen (Resonanzen) ausbilden (tangentiale Steifigkeit etwa > 5000 Nm/Grad)

Die Aufhebung des Formschlusses erfolgt bei entspannter Druckkammer 21 b durch Entlastung der Tellerfeder 44 und die Rückstellkraft der Blattfedern 27b, so dass der Klauenring 28b zurückstellt und der Beabstandungsring bei axialer Entlastung mittels der Energiespeicher 50 in seine Ursprungslage zurückgestellt wird. Durch die Abstützung der Axialkräfte der Synchronkupplung 8a zwischen den Ringansätzen 30b, 31b des Kurbelwellenteils 6b ist ein geschlossener Kraftfluss innerhalb des Kurbelwellenteils 6b gegeben, so dass die Kurbelwellenlager 32b der Brennkraftmaschine 3b nicht axial belastet werden und keine Schleppmomente ausbilden.

Figur 8 zeigt ein gegenüber der Brennkraftmaschine 3b der Figur 6 vereinfacht ausgestaltetes Ausführungsbeispiel einer Brennkraftmaschine 3c. In Abänderung zu dieser ist der Ringzylinder 37c mit der Druckkammer 21c der Betätigungseinrichtung 17c an dem Kurbelwellenteil 7c aufgenommen, jedoch axial an dem Kurbelwellenteil 6c abgestützt, so dass ein innerhalb des Kurbelwellenteils 6c geschlossener Kraftfluss der Synchronkupplung 8c erzielt wird und die Kurbelwellenlager 32c entlastet werden. Die bei der Betätigung der Reibungskupplung 9c und der Formschlusskupplung 10c entstehenden Axialkräfte werden durch das Axiallager 58 abgestützt. Hierzu sind der Kurbelwellenteil 6c und der Trägerteil 59 der Synchronkupplung 8c voneinander getrennt ausgebildet und mittels der unter der axialen Wirkung der Schraubverbindung 60 wirksamen Hirth-Verzahnung 61 oder dergleichen drehfest miteinander verbunden. Alternativ können neben der gezeigten axialen Zentralverschraubung radial Verschraubungen zwischen Kurbelwellenteil 6c und Trägerteil 59 vorgesehen sein. Das Axiallager 58 ist dabei zwischen dem an der Schraubverbindung 60 aufgenommenen Ringflansch 62 und dem nach radial innen erweiterten und den Ringflansch 62 übergreifenden Ringflansch 63 des Ringzylinders 37c aufgenommen.

### Bezugszeichenliste

- 1: Diagramm
- 2: Diagramm
- 3: Brennkraftmaschine
- 3a: Brennkraftmaschine
- 3b: Brennkraftmaschine
- 3c: Brennkraftmaschine
- 4: Hauptmotor
- 5: Ergänzungsmotor
- 6: Kurbelwellenteil
- 6a: Kurbelwellenteil
- 6b: Kurbelwellenteil
- 6c: Kurbelwellenteil
- 7: Kurbelwellenteil
- 7a: Kurbelwellenteil
- 7b: Kurbelwellenteil
- 7c: Kurbelwellenteil
- 8: Synchronkupplung
- 8a: Synchronkupplung
- 8b: Synchronkupplung
- 8c: Synchronkupplung
- 9: Reibungskupplung
- 9a: Reibungskupplung
- 9b: Reibungskupplung
- 9c: Reibungskupplung
- 10: Formschlusskupplung
- 10a: Formschlusskupplung
- 10b: Formschlusskupplung
- 10c: Formschlusskupplung
- 11: Lamellenkupplung
- 12: Formschlusselement
- 12a: Formschlusselement
- 12b: Formschlusselement
- 13: Formschlusselement
- 13a: Formschlusselement
- 13b: Formschlusselement
- 14: Klaue
- 14a: Klinke
- 14b: Ausnehmung
- 15: Klaue
- 15a: Ausnehmung
- 15b: Klaue
- 16: Nadellager
- 17: Betätigungseinrichtung
- 17b: Betätigungseinrichtung
- 17c: Betätigungseinrichtung
- 18: Betätigungseinrichtung
- 18a: Betätigungseinrichtung
- 19: Druckkanal
- 19b: Druckkanal
- 20: Druckkanal
- 21: Druckkammer
- 21b: Druckkammer
- 21c: Druckkammer
- 22: Druckkammer
- 22a: Druckkammer
- 23: Kolben
- 23b: Kolben
- 24: Kolben
- 24a: Kolben
- 25: Drucktopf
- 25b: Drucktopf
- 26: Tellerfeder
- 27: Blattfeder
- 27b: Blattfeder
- 28: Klauenring
- 28b: Klauenring
- 29: Tellerfeder
- 30: Ringansatz
- 30b: Ringansatz
- 31: Ringansatz
- 31b: Ringansatz
- 32: Kurbelwellenlager
- 32b: Kurbelwellenlager
- 32c: Kurbelwellenlager
- 33: Drehlager
- 34: Stift
- 35: Blattfeder
- 37: Ringzylinder
- 37c: Ringzylinder
- 38: Ringteil
- 39: Drehentkopplung
- 40: Tellerfeder
- 41: Lamellenpaket
- 42: Lamellenträger
- 43: Lamellenträger
- 44: Tellerfeder
- 45: Rücksprung
- 46: Niet
- 47: radialer Ansatz
- 48: Beabstandungsring
- 49: Schiebeverzahnung
- 50: Energiespeicher
- 51: Niet
- 52: Steueröffnung
- 53: Gleitrampe
- 54: Ausnehmung
- 55: Nase
- 56: Pfeil
- 57: Anschlag
- 58: Axiallager
- 59: Trägerteil
- 60: Schraubverbindung
- 61: Hirth-Verzahnung
- 62: Ringflansch
- 63: Ringflansch
- M: Moment
- M(K): Kupplungsmoment
- M(K1): vorgegebenes Kupplungsmoment
- M(KW2): Moment zweiter Kurbelwellenteil
- M(R): Grenzmoment
- n: Drehzahl
- n(KW1): Drehzahl erster Kurbelwellenteil
- n(KW2): Drehzahl zweiter Kurbelwellenteil
- SP: Synchronpunkt
- t(R): Zeitpunkt
- t(S): Startpunkt
- x: Drehachse
- α(KW1): Drehwinkel erster Kurbelwellenteil
- α(KW2): Drehwinkel zweiter Kurbelwellenteil
- α(Diff): Differenzwinkel
- Δn: Differenzdrehzahl

## Patentansprüche

1. Verfahren:zum Betrieb einer Brennkraftmaschine (3, 3a, 3b, 3c) mit einem ersten, auch ausschließlich betriebenen Hauptmotor (4) mit einem ersten Kurbelwellenteil (6, 6a, 6b, 6c) und einem zweiten, mittels einer Synchronkupplung (8, 8a, 8b, 8c) mit diesem koppelbaren Ergänzungsmotor (5) mit einem zweiten Kurbelvirellenteil (7, 7a, 7b, 7c), wobei die Synchronkupplung (8, 8a, 8b, 8c) aus einer eine vorgegebene Schlupfdrehzahl zwischen den Kurbelwellenteilen (6, 6a, 6b, 6c, 7, 7a, 7b, 7c) einstellenden Reibungskupplung (9, 9a, 9b, 9c) und einer bei Einstellung der Schlupfdrehzahl an einer Synchronposition (SP) mit exakter Drehwinkelposition einer vorgegebenen Zündfolge der Brennkraftmaschine (3, 3a, 3b, 3c) mit gekoppelten Kurbelwellenteilen (6, 6a, 6b, 6c, 7, 7a, 7b, 7c) einen Formschluss dieser einstellenden beziehungsweise lösenden Formschlusskupplung (10, 10a, 10b, 10c) gebildet ist,
wobei während eines Synchronvorgangs der beiden Kurbelwellenteile (6, 6a, 6b, 6c, 7, 7a, 7b, 7c) bei stillgelegtem Ergänzungsmotor (5) und anfangs geöffneter Synchronkupplung (8, 8a, 8b, 8c) ein über die Reibungskupplung (9, 9a, 9b, 9c) übertragenes Kupplungsmoment (M(K)) auf die vorgegebene Schlupfdrehzahl zwischen den Kurbelwellenteilen (6, 6a, 6b, 6c, 7, 7a, 7b, 7c) geregelt, der Ergänzungsmotor (5) gestartet und die Synchronposition (SP) durch Beschleunigung des Kurbelwellenteils (7, 7a, 7b, 7c) des Ergänzungsmotors (5) angefahren und die Formschlusskupplung (10, 10a, 10b, 10c) geschlossen wird, **dadurch gekennzeichnet**, dassdie Drehzahl des Ergänzungsmotors (5) während des Synchronvorgangs begrenzt wird..

2. Verfahren nach Anspruch 1, **dadurch gekennzeichnet**, däss ein Motormoment nach dem Start des Ergänzungsmotors (5) auf einen von einer Winkelabweichung der Kurbelwellenteile (6, 6a, 6b, 6c, 7, 7a, 7b, 7c) von der Synchronposition (SP) abhängigen Motormomentenwert geregelt wird.

3. Verfahren nach Anspruch 1 oder 2, **dadurch gekennzeichnet, dass** das Kupplungsmoment (M(K)) nach dem Start des Ergänzungsmotors (5) auf einen von einer Winkelabweichung der Kurbelwellenteile (6, 6a, 6b, 6c, 7, 7a, 7b, 7c) von der Synchronposition (SP) abhängigen Kupplungsmomentenwert geregelt wird.

4. Verfahren nach einem der Ansprüche 1 bis 3, **dadurch gekennzeichnet, dass** bei nicht symmetrisch ausgebildetem Haupt- und Ergänzungsmotor (4, 5) mit einer 720°-Zündfolge bei gekoppelten Kurbelwellenteilen (6, 6a, 6b, 6c, 7, 7a, 7b, 7c) eine Aktivierung eines Synchronvorgangs ausschließlich bei einer Winkelpositionierung der Kurbelwellenteile (6, 6a, 6b, 6c, 7, 7a, 7b, 7c) unter Einhaltung der 720°-Zündfolge gestartet wird.

## Claims

1. Method for operating an internal combustion engine (3, 3a, 3b, 3c) with a first, also exclusively operated main engine (4) with a first crankshaft part (6, 6a, 6b, 6c) and a second supplementary engine (5) which can be coupled to the former by means of a synchronizer clutch (8, 8a, 8b, 8c) with a second crankshaft part (7, 7a, 7b, 7c), the synchronizer clutch (8, 8a, 8b, 8c) being formed from a friction clutch (9, 9a, 9b, 9c), which sets a predefined slip speed between the crankshaft parts (6, 6a, 6b, 6c, 7, 7a, 7b, 7c), and a positively locking clutch (10, 10a, 10b, 10c) which, during setting of the slip speed, sets or releases a positively locking connection of coupled crankshaft parts (6, 6a, 6b, 6c, 7, 7a, 7b, 7c) at a synchronizing position (SP) with an exact rotary angle position of a predefined ignition sequence of the internal combustion engine (3, 3a, 3b, 3c) with the said coupled crankshaft parts (6, 6a, 6b, 6c, 7, 7a 7b, 7c), a clutch moment (M(K)) which is transmitted via the friction clutch (9, 9a, 9b, 9c) being regulated to the predefined slip speed between the crankshaft parts (6, 6a, 6b, 6c, 7, 7a, 7b, 7c) during a synchronizing operation of the two crankshaft parts (6, 6a, 6b, 6c, 7, 7a, 7b, 7c) in the case of the supplementary engine (5) being at a standstill and the synchronizer clutch (8, 8a, 8b, 8c) being initially open, the supplementary engine (5) being started, and the synchronizing position (SP) being moved to by way of acceleration of the crankshaft part (7, 7a, 7b, 7c) of the supplementary engine (5), and the positively locking clutch (10, 10a, 10b, 10c) being closed, **characterized in that** the rotational speed of the supplementary engine (5) is limited during the synchronizing operation.

2. Method according to Claim 1, **characterized in that** an engine moment after the starting of the supplementary engine (5) is regulated to an engine moment value which is dependent on an angular deviation of the crankshaft parts (6, 6a, 6b, 6c, 7, 7a, 7b, 7c) from the synchronizing position (SP).

3. Method according to Claim 1 or 2, **characterized in that** the clutch moment (M(K)) after the starting of the supplementary engine (5) is regulated to a clutch moment value which is dependent on an angular deviation of the crankshaft parts (6, 6a, 6b, 6c, 7, 7a, 7b, 7c) from the synchronizing position (SP).

4. Method according to one of Claims 1 to 3, **characterized in that**, in the case of an asymmetrically configured main engine (4) and supplementary engine (5) with a 720° ignition sequence in the case of coupled crankshaft parts (6, 6a, 6b, 6c, 7, 7a, 7b, 7c), an activation of a synchronizing operation is started exclusively in the case of an angular positioning of the crankshaft parts (6, 6a, 6b, 6c, 7, 7a, 7b, 7c) with adherence to the 720° ignition sequence.

## Revendications

1. Procédé pour faire fonctionner un moteur à combustion interne (3, 3a, 3b, 3c) comprenant un premier moteur principal (4) également entraîné exclusivement, avec une première partie de vilebrequin (6, 6a, 6b, 6c) et un deuxième moteur complémentaire (5) pouvant être accouplé à celui-ci au moyen d'un accouplement synchrone (8, 8a, 8b, 8c) avec une deuxième partie de vilebrequin (7, 7a, 7b, 7c), l'accouplement synchrone (8, 8a, 8b, 8c) étant formé d'un embrayage à friction (9, 9a, 9b, 9c) ajustant un régime de glissement prédéfini entre les parties de vilebrequin (6, 6a, 6b, 6c, 7, 7a, 7b, 7c) et un embrayage à engagement par correspondance de formes (10, 10a, 10b, 10c) ajustant ou desserrant un engagement par correspondance de formes des parties de vilebrequin (6, 6a, 6b, 6c, 7, 7a, 7b, 7c) dans le cas d'un ajustement du régime de glissement à une position synchrone (SP) avec une position d'angle de rotation exacte d'une séquence d'allumage prédéfinie du moteur à combustion interne (3, 3a, 3b, 3c), avec les parties de vilebrequin accouplées,
dans lequel, pendant une opération synchrone des deux parties de vilebrequin (6, 6a, 6b, 6c, 7, 7a, 7b, 7c) lorsque le moteur complémentaire (5) est à l'arrêt et au début de l'accouplement synchrone ouvert (8, 8a, 8b, 8c), un couple d'embrayage (M(K)) transmis par le biais de l'embrayage à friction (9, 9a, 9b, 9c) est régulé au régime de glissement prédéfini entre les parties de vilebrequin (6, 6a, 6b, 6c, 7, 7a, 7b, 7c), le moteur complémentaire (5) est démarré et la position synchrone (SP) est lancée par l'accélération de la partie de vilebrequin (7, 7a, 7b, 7c) du moteur complémentaire (5) et l'embrayage à engagement par correspondance de formes (10, 10a, 10b, 10c) est fermé, **caractérisé en ce que** le régime du moteur complémentaire (5) est limité pendant l'opération synchrone.

2. Procédé selon la revendication 1, **caractérisé en ce qu'**un couple moteur est régulé après le démarrage du moteur complémentaire (5) à une valeur de couple moteur dépendant d'un écart angulaire des parties de vilebrequin (6, 6a, 6b, 6c, 7, 7a, 7b, 7c) par rapport à la position synchrone (SP).

3. Procédé selon la revendication 1 ou 2, **caractérisé en ce que** le couple d'embrayage (M(K)) est régulé après le démarrage du moteur complémentaire (5) à une valeur de couple d'embrayage dépendant d'un écart angulaire des parties de vilebrequin (6, 6a, 6b, 6c, 7, 7a, 7b, 7c) par rapport à la position synchrone (SP).

4. Procédé selon l'une quelconque des revendications 1 à 3, **caractérisé en ce que** lorsque le moteur principal et le moteur complémentaire (4, 5) ne sont pas réalisés de manière symétrique, avec une séquence d'allumage de 720° lorsque les parties de vilebrequin (6, 6a, 6b, 6c, 7, 7a, 7b, 7c) sont accouplées, une activation d'une opération synchrone est commandée exclusivement dans le cas d'un positionnement angulaire des parties de vilebrequin (6, 6a, 6b, 6c, 7, 7a, 7b, 7c) en conservant la séquence d'allumage de 720°.
